# EUROPEAN PATENT SPECIFICATION

(11) **EP 3 111 812 B1**
(45) Date of publication and mention of the grant of the patent: **18.04.2018**
(21) Application number: 16177041.7
(22) Date of filing: 30.06.2016
(51) Int. Cl.: A47J 31/44, A47J 31/06

(54) **MACHINE FOR MAKING INFUSED BEVERAGES AND RESPECTIVE INFUSION ASSEMBLY**
MASCHINE ZUR HERSTELLUNG VON BRÜHGETRÄNKEN UND INFUSIONSANORDNUNG
MACHINE DE PRODUCTION DE BOISSONS PAR INFUSION ET ENSEMBLE D'INFUSION

(30) Priority: 03.07.2015 IT UB20151895
(43) Date of publication of application: 04.01.2017
(73) Proprietor: Scacco S.A., 6900 Lugano (CH)
(72) Inventor: CAPITANI, Emilio Alfredo, 6900 Lugano (CH)
(74) Representative: Fabiano, Piero

(56) References cited:
- EP-A1- 2 401 945
- EP-A2- 1 016 364
- EP-A2- 1 319 357
- WO-A1-2015/024798
- US-A1- 2001 050 002

## Description

### Field of the Invention

The present invention relates to machines for making infused beverages, such as coffee, tea, tisanes, chocolate, etc. from a capsule or pod containing an aromatic substance and to the respective infusion assemblies.

In particular, the present invention relates to a machine for making infused beverages and an infusion assembly formed so as to cooperate with the above mentioned machine.

### Known Art

The document US 2001/0050002 A1 discloses a device for preparing espresso coffee or similar drinks. Known infusion devices for coffee machines usually comprise a first cup-shaped infusing member, generally named female infuser, comprising a recess adapted to house an infusion capsule and/or pod, containing an aromatic essence, and a second member, generally named male infuser, adapted to close the above said recess in order to define an infusion chamber in conjunction with the first infusing member. The capsule, containing the aromatic essence, is put or moved into the infusion chamber so that the aromatic essence is extracted by introducing pressurized hot water into the infusion capsule and/or pod.

The infusion chamber is communicating with at least one outlet duct for the infused beverage, ending with an outlet nozzle or hopper for the beverage.

The Applicant has found that, to ensure a good quality of the infused beverage, hot water and the aromatic essence contained in the pod or capsule must be kept in contact for a certain time in the infusion chamber, so that the hot water is able to fully extract the aromatic essence.

In other words, the infused beverage must not immediately flow out of the infusion chamber, but must stay therein for a predetermined period.

Therefore, the Applicant found the need to provide a device able to delay the outflow of the infused beverage from the infusion chamber.

The Applicant has therefore resolved to provide an infusion assembly provided with a sealing valve device adapted to open to allow the passage of the infused beverage only after a certain lapse of time, when the pressure of the beverage in the infusion chamber exceeds a predefined threshold value.

### Summary of the invention

Therefore, a first aspect of the invention concerns a machine for making infused beverages, comprising:
- at least one lower portion; and
- at least one upper portion;
- at least one first infusion assembly comprising:
- a first infusing member, comprising a recess adapted for accommodating at least partially a capsule or pod,
- a second infusing member, adapted for cooperating with said first infusing member so as to at least partially close said recess to define an infusion chamber with said first infusing member; wherein:
   - said first infusing member is preferably removable with respect to said lower portion and comprises at least one sealing valve device; said sealing valve device being adapted to open in order to allow the passage of the infused beverage when the pressure of said beverage in the infusion chamber exceeds a predefined threshold value;
   - said sealing valve device comprising:
   - at least one aperture for the outflow of the infused beverage from said recess;
   - at least one sealing member movable between a first position in which said at least one sealing member intercepts said aperture thereby preventing the outflow of the infused beverage, and a second position in which it is spaced from said aperture and keeps clear the passage for the outflow of the infused beverage from said recess; and
   - at least one locking member to hold said at least one sealing member in said second position.

In the above said aspect, the present invention can have at least one of the preferred characteristics hereinafter described.

Advantageously, the above said sealing valve device is provided on a bottom wall of the first infusing member.

Preferably, there are first elastic means adapted for pushing said at least one sealing member to the first position.

Advantageously, as the predefined pressure threshold value of the beverage inside the infusion chamber has been reached, this causes said at least one sealing member to move from the first position to the second position.

In this way, the first sealing member is prevented from returning to the first position thereby stopping the outflow of the infused beverage during the delivery thereof. Advantageously, the locking member comprises:
- at least one second piston member; and
- at least one cavity;
- said second piston member being movable between a first position, in which said second piston member is engaged in said cavity thereby holding said at least one sealing member in said second position; and a second position in which said second piston member is spaced from said cavity and allows said at least one sealing member to return to its first position in which it intercepts said aperture.

Conveniently, the locking member further comprises elastic means adapted to act on said second piston member.

Advantageously, there is at least one unlocking member to release said at least one sealing member from said second position, thereby allowing it to return to said first position under the action of said elastic means.

Preferably, the elastic means comprise a helical spring compressing said at least one sealing member to push it towards said aperture.

Conveniently, there are adjusting means to adjust the pressure threshold value of said beverage in the infusion chamber in order to adjust the opening of said aperture so that the infused beverage can pass.

Preferably, the unlocking member comprises a lever adapted to act on said second piston member to disengage it from said cavity.

Further characteristics and advantages of the invention will become more apparent from the detailed description of some preferred, but not exclusive, embodiments of a machine for making infused beverages and an infusion assembly for making an infused beverage from a capsule or pod according to the present invention.

### Brief description of the drawings

Further characteristics and advantages of the invention will become more apparent from the detailed description of some preferred, but not exclusive, embodiments of a machine for making infused beverages and an infusion assembly for making an infused beverage from a capsule or pod according to the present invention.

This description will be explained hereinafter referring to the attached drawings provided for illustration purposes only and without limitation, in which:
- figure 1 shows a schematic view of a machine for preparing an infused beverage in which an infusion assembly according to the present invention has been removed from the accommodating recess;
- figures 2a; 2b; 2c are schematic views of a machine for preparing an infused beverage with an infusion assembly according to the present invention, in which the upper portion of the machine is in three different positions; and
- figure 3 is a schematic side view of a first embodiment of the first infusing member.

### Detailed description of embodiments of the invention

Referring to figures, a machine for making infused beverages, according to the present invention, is denoted by the numerical reference 100.

Referring to figures, an infusion assembly, in particular for machines 100 for preparing an infused beverage by a capsule 44 containing an aromatic substance, according to the present invention, is denoted instead by the numerical reference 10. The infusion assembly 10, as shown in figures, comprises a first infusing member 3 provided with a recess 4 and a second infusing member 5 cooperating with the first infusing member in order to define, by a coupling therewith, an infusion chamber 14.

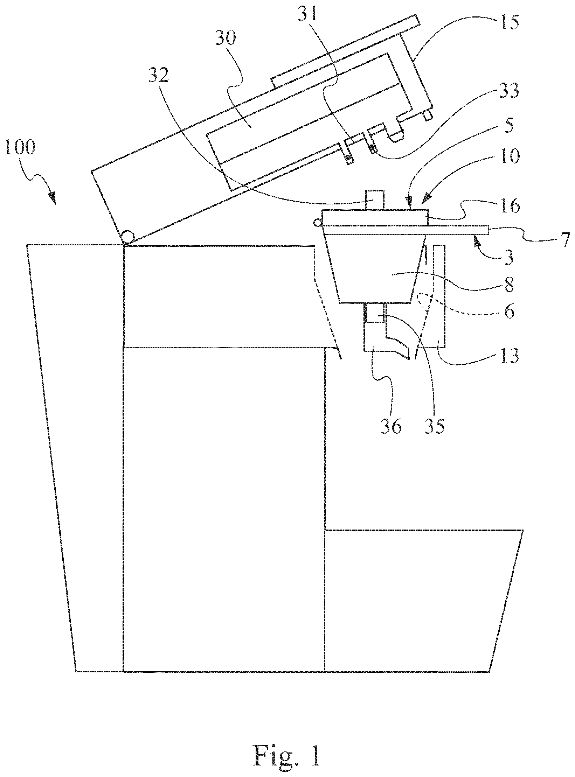

In the embodiment shown in figure 1, the first infusing member 3 can be housed in a lower portion 13 of the frame of the machine 100, whereas the second infusing member 5 can be housed in an upper portion 15 of the frame of the machine 100. Furthermore, still referring to the embodiment shown in figure 1, the lower portion 13 of the machine frame is fixed, whereas the upper portion 15 of the machine frame is movable.

According to an embodiment not shown, the lower portion 13 of the machine frame is movable, whereas the upper portion 15 of the machine frame is fixed.

Turning back to the embodiment shown in figure 1, the upper movable portion 15 is movable between a working position in which it cooperates with the fixed lower portion 13 to define, by a coupling therewith, an accommodating seat 6 for the infusion assembly, and a second position in which the upper movable portion 15 is spaced with respect to the fixed lower portion 13, thus leaving open the access to the accommodating seat 6 of the infusion assembly 10.

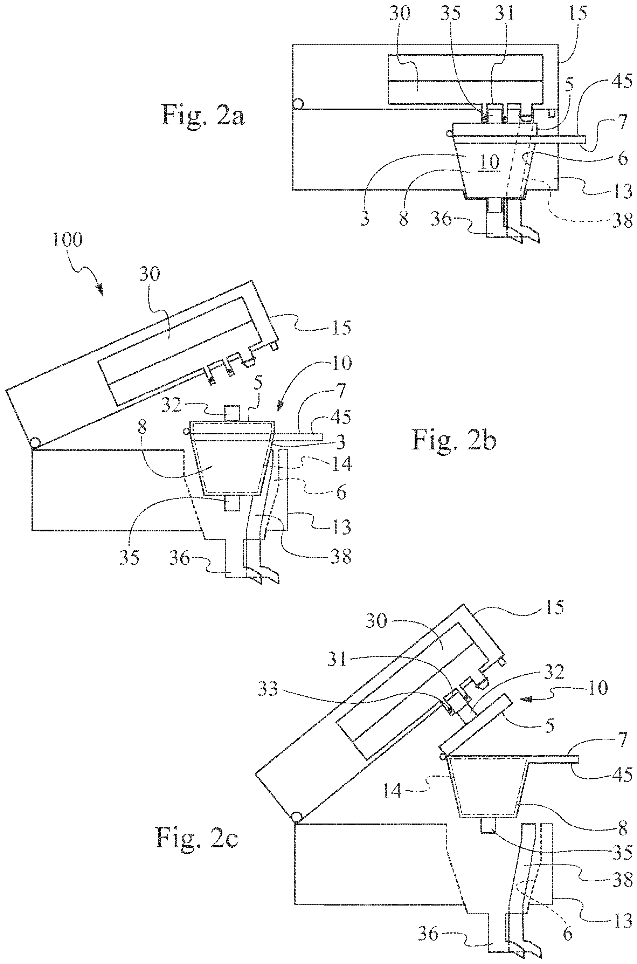

In figures 2a to 2c, the movement of the upper movable portion 15 from the working position (Fig. 2a) to the second position (fig.2c.) is shown in sequence.

In the embodiment shown in figures 1-2c, the upper movable portion 15 is hinged to the lower fixed portion 13.

Moreover, in the embodiment shown in figures, the upper movable portion 15 has an exchanger 30 so that, unlike traditional machines, the infusion chamber is almost directly supplied with hot water, that is to say without long ducts involving heat loss. According to this alternative embodiment, the exchanger 30 has a water outlet duct 31 adapted to cooperate with an input shank 32 positioned on an element of the infusion assembly 10, later described in more details.

Between the afore said water outlet duct 31 and the inlet shank 32 sealing members can be provided, such as annular sealing members 33.

In an alternative embodiment, the lower portion 13 of the machine frame is movable, whereas the upper portion 15 of the machine frame is fixed.

In both embodiments, the accommodating seat 6 is sized to house an infusion assembly adapted to contain a capsule 44 or pod for making an infused beverage. According to the embodiment shown in figures, the infusion assembly 10 can be removably inserted inside the accommodating seat 6 of the infusion assembly. As an alternative, the infusion assembly 10 could be inserted in or made in one piece with the machine 100.

The infusion assembly 10, later described in more details, has an outer shape, or a portion thereof, adapted to be coupled with the accommodating seat 6 of the infusion assembly, whereas the inner shape depends on the type or size of the capsule or pod to be accommodated therein.

According to an embodiment shown in figures 1-3, the first infusing member 3 is constrained to the second infusing member 5 so as to allow the infusion chamber 14 to be opened or hermetically closed for the insertion of an infusion capsule or pod. As an alternative, the first infusing member 3 could not be constrained to the second infusing member 5, the first and second infusing members couple to each other in the machine so as to obtain the infusion chamber 14.

Unlike machines according to the known art, the infusion chamber obtained in the infusion assembly 10 is removable from the machine 100.

The first infusing member 3, in the embodiments shown in figures, comprises a supporting member 7 and a containing portion 8 comprising said accommodating recess 4 for at least partially accommodating an infusion capsule or pod. The containing portion 8 has a substantially cylindrical or truncated-conical body, whereas the supporting member 7 extends from the containing portion. In the embodiment shown in figures 1-3 the supporting member 7 is rigidly constrained to the containing portion 8.

The second infusing member 5 has a discoidal or cylindrical shape adapted to cooperate with the lid-like shape of the first infusing member 3, to obtain the infusion chamber 14.

Preferably, the second infusing member 5 is hinged to the first infusing member 3 so that to be rotatable between a lowered position, shown for example in figure 2b, and an open position of the infusion chamber 14, shown for example in figure 2c. In the lowered position the second infusing member 5, moving closer to the first infusing member 3, closes the infusion chamber 14 hermetically.

For this purpose, there are annular sealing members 19 interposed between said first infusing member 3 and said second infusing member 5.

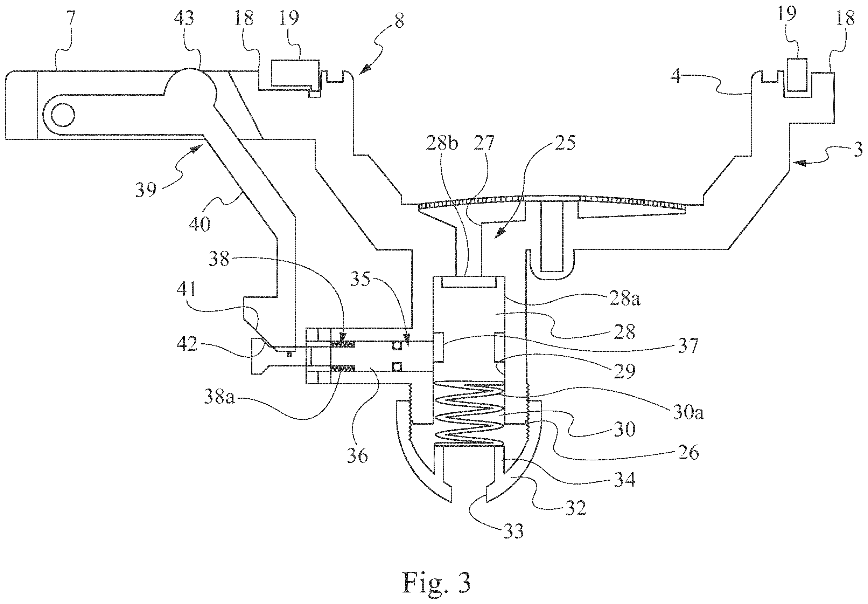

In the embodiment shown in figure 3, the first infusing member 3 has an upper peripheral edge 18 extending outside the recess 4 in a plane substantially horizontal with respect to the vertical axis of the recess 4.

In such embodiment, the annular sealing member 19 is concentrically arranged outside the recess 4 and is an O-ring arranged in a dedicated annular seat obtained on the upper peripheral edge 18.

According to an embodiment not shown, the annular sealing members 19 can be arranged in a dedicated groove obtained on the second infusing member 5.

As an alternative, the annular sealing members 19 can be arranged in a dedicated groove obtained on the second infusing member 5 to engage the inner side walls of the recess 4, thus operating so as to substantially seal in radial direction with respect to the vertical axis of the recess 4.

According to an aspect of the invention, the second infusing member 5 comprises injection means to inject water inside the chamber 14 and therefore the capsule or pod.

The injection means to inject water inside the chamber 14 can have different shapes and sizes depending on the type of capsule or pod used or the different infusion technique used.

According to an important aspect of the present invention, the first infusing member 3 comprises, on a bottom wall thereof, at least one sealing valve device 25. The sealing valve device 25 is adapted to open in order to allow the passage of the infused beverage when the beverage pressure in the infusion chamber 14 exceeds a predefined threshold value.

For this purpose, in the embodiment shown in the figures, the sealing valve device 25 comprises an aperture 27 for the outflow of the infused beverage from the accommodating recess 4 of the first infusing member 3 and at least one sealing member 28.

The sealing member 28 is movable within a duct 29 arranged in communication with the aperture 27 at an end of the latter.

In detail, the sealing member 28 is movable within the duct 29 between a first position, in which said at least one sealing member 28 intercepts the aperture 27 thereby blocking the latter and preventing the outflow of the infused beverage, and a second position in which the sealing member 28 is spaced from the aperture 27 thereby keeping clear the passage for the outflow of the infused beverage from the recess.

In the embodiment shown in figures, the sealing member 28 is a first piston member 28a having a cross section slightly smaller than that of the duct 29, when the sealing member 28 is spaced from the aperture 27, the infused beverage, after passing through the aperture 27, flows out through the clearance between the sealing member 28 and the duct 29.

At the head of the sealing member 28 there can be a gasket 28b or other similar sealing device shaped and sized so as to completely cover the aperture 27 when the sealing member 27 is in its first position intercepting and closing the aperture 27. In order to push the sealing member 28 to its first position, the sealing device 25 further comprises first elastic means 30 adapted to push the sealing member 28 against the aperture 27 to block the latter and prevent the infused beverage from flowing out from the accommodating recess 4 of the first infusing member 3.

In the embodiment shown in figure, the first elastic means 30 are depicted by a helical spring 30a acting on the sealing member 28 to push the latter against the aperture 27.

The helical spring 30a is positioned in the duct 29, and has an end in contact with the sealing member 28 and the other end in contact with a lid 32 of the duct 29. When the pressure of the infused beverage inside the chamber 14 reaches and exceeds the threshold value, the force of the elastic means 30 holding the sealing member 28 pressed against the aperture 27, is overcome.

The beverage pressure applied on the head of the sealing member 28 biases the latter to move to its second position thus allowing the infused beverage to flow out of the chamber 14.

In the embodiment shown in figure 3, the lid 32 is dome-shaped and has a central hole 33 for the outflow of the beverage and two inner shoulders 34 for the helical spring 30a to abut thereon.

The lid 32 is fixed by a thread to a cylindrical shank 26 containing the duct 29.

By varying the screwing of the lid on the shank 34, the stroke of the helical spring 30a is adjusted and accordingly the threshold value to be reached by the inner pressure of the beverage to flow out through the aperture 27.

Therefore, the helical spring 30a together with the lid 32 and the thread form adjusting means to adjust the pressure threshold value of the beverage in the infusion chamber 14.

However, different adjusting means to adjust the pressure threshold value of the beverage in the infusion chamber 14 can be provided in order to adjust the opening of said aperture 27 so that the infused beverage can pass.

There is at least one locking member 35 to prevent the sealing member 28, once it has reached its second position, from returning to its first position before the infused beverage has been completely delivered.

The locking member 35 holds the sealing member 28 in its second position and, according to the embodiment shown in figures, comprises at least one second piston member 36 and at least one cavity 37.

The second piston member 36 is movable between an engaging position, in which it is engaged in the cavity 37 thereby holding the sealing member 28 in its second position, and a disengaging position in which the second piston member 36 is spaced from the cavity 37 and allows the sealing member 28 to return to its first position in which it intercepts the aperture 27 thereby preventing the infused beverage from flowing out.

The locking member 35 further comprises second elastic means 38 adapted to act on the second piston member 36 to push the latter to be engaged in the cavity 37. Again, the second elastic means 38 are constituted of a helical spring 38a in abutment against the second piston member 36.

However, different second elastic means can be provided without departing from the protection scope of the present invention.

In an alternative embodiment, the locking member 35 comprises a bowl or ball adapted to be pushed into a cavity 37 in order to hold the sealing member 28 in its second position.

Advantageously, to release said at least one sealing member 28 from its second position, thereby allowing it to return to the first position under the action of said elastic means 30, the sealing valve device 25 according to the present invention comprises an unlocking member 39.

In the embodiment shown in figures, the unlocking member 39 is a lever 40 acting on the second piston member 36.

The lever 40 is hinged to the first infusing member 3 and, in particular, to its supporting member 7 and is shaped substantially as a bell-crank lever so that, by rotating clockwise, it causes the retraction of second piston member 36 thereby releasing the latter from the cavity 37, vice versa by rotating counterclockwise it allows the helical spring 38a to bring back the second piston member 36 to be engaged in the cavity 37.

For this purpose, at an end of the lever 40 there is an inclined plane 41 adapted to slide on a corresponding inclined plane 42 provided at an end of the second piston member 36.

The elastic means 38, by pushing forward the second piston member 36, i.e. to its position of engagement with the cavity 37, also cause the lever 40 to rotate counterclockwise. Conversely, the clockwise rotation of the lever 40 to disengage the second piston member 36 with respect to the cavity 37, is manually operated by the user by applying, for example by a finger, a pressure on at least one jut 43 protruding above from the lever 40.

As an alternative, the clockwise rotation of the lever 40 to disengage the second piston member 36 with respect to the cavity 37, could be operated by the interference between said jut 43 protruding above from the lever 40 and a protruding portion of the machine or the second infusing member 5.

According to an alternative embodiment, the unlocking member 39 can be an electromechanical member operated by at least one solenoid.

To the embodiments herein represented in detail, various modifications may be made anyway remaining in the protection scope of the invention, defined by the following claims.

## Claims

1. Machine (100) for making infused beverages comprising:
- at least one lower portion (13); and
- at least one upper portion (15);
- at least one first infusion assembly (10) comprising:
- a first infusing member (3), comprising a recess (4) adapted for accommodating at least partially a capsule or pod,
- a second infusing member (5), adapted for cooperating with said first infusing member (3) so as to at least partially close said recess (4) to define an infusion chamber (14) with said first infusing member; wherein:
- said first infusing member (3) comprises at least one sealing valve device (25); said sealing valve device (25) being adapted to open to allow the passage of the infused beverage when the pressure of said beverage in the infusion chamber (14) exceeds a predefined threshold value;
- said sealing valve device (25) comprising:
- at least one aperture (27) for the outflow of the infused beverage from said recess;
- at least one sealing member (28) movable between a first position in which said at least one sealing member (28) intercepts said aperture (27) thereby preventing the outflow of the infused beverage, and a second position in which it is spaced from said aperture (27) and keeps clear the passage for the outflow of the infused beverage from said recess (4); the machine (100) being **characterized in that** said sealing valve device (25) further comprises:
- at least one locking member (35) to hold said at least one sealing member (28) in said second position.

2. Machine (100) for making infused beverages according to claim 1, **characterized by** comprising first elastic means (30) adapted for pushing said at least one sealing member (28) to said first position.

3. Machine (100) for making infused beverages according to claim 1, **characterized in that** the movement from said first position to said second position of said at least one sealing member (28) is due to the fact that the predefined threshold value of the pressure inside said infusion chamber (14) has been reached.

4. Machine (100) for making infused beverages according to claim 1, **characterized in that** said locking member (35) comprises:
- at least one second piston member (36); and
- at least one cavity (37);
- said second piston member (36) being movable between a first position, in which said second piston member (36) is engaged in said cavity (37) thereby holding said at least one sealing member (28) in said second position; and a second position in which said second piston member (36) is spaced from said cavity (37) and allows said at least one sealing member (28) to return to its first position in which it intercepts said aperture (27).

5. Machine (100) for making infused beverages according to claim 4, **characterized in that** said locking member (35) further comprises elastic means adapted to act on said second piston member (36).

6. Machine (100) for making infused beverages according to claim 1, **characterized by** comprising an unlocking member (39) to release said at least one sealing member (28) from said second position, thereby allowing it to return to said first position under the action of said elastic means (30).

7. Machine (100) for making infused beverages according to claim 1, **characterized in that** said first elastic means (30) comprise a helical spring (30a) compressing said at least one sealing member (28) to push it towards said aperture (27).

8. Machine 100) according to claim 1, **characterized by** comprising adjusting means to adjust the pressure threshold value of said beverage in the infusion chamber (14) in order to adjust the opening of said aperture (27) so that the infused beverage can pass.

9. Machine (100) according to claim 6, **characterized in that** said unlocking member (39) comprises a lever (40) adapted to act on said second piston member (36) to disengage it from said cavity (37).

10. Machine (100) according to claim 1, **characterized in that** said first infusing member (3) is removable with respect to said lower portion (13).

## Patentansprüche

1. Maschine (100) zur Herstellung von infundierten Getränken, umfassend:
- mindestens einen unteren Teil (13); und
- mindestens einen oberen Teil (15);
- mindestens eine erste Infusionsanordnung (10), umfassend:
- ein erstes Infusionselement (3), umfassend eine Aussparung (4), die angepasst ist, um zumindest teilweise eine Kapsel oder einen Halter aufzunehmen;
- ein zweites Infusionselement (5), das angepasst ist, um mit dem ersten Infusionselement (3) zusammenzuwirken, so dass die Aussparung (4) zumindest teilweise geschlossen ist, um eine Infusionskammer (14) mit dem ersten Infusionselement zu definieren;
wobei:
- das erste Infusionselement (3) mindestens eine Dichtungsventilvorrichtung (25) umfasst; wobei die Dichtungsventilvorrichtung (25) angepasst ist, sich zu öffnen, um den Durchgang des infundierten Getränks zu ermöglichen, wenn der Druck des Getränks in der Infusionskammer (14) einen vordefinierten Schwellenwert überschreitet;
- die Dichtungsventilvorrichtung (25) umfasst:
- mindestens eine Öffnung (27) für den Abfluss des infundierten Getränks aus der Aussparung;
- mindestens ein Dichtungselement (28), das zwischen einer ersten Position, in der das mindestens eine Dichtungselement (28) die Öffnung (27) durchdringt, wodurch der Abfluss des infundierten Getränks verhindert wird, und einer zweiten Position, in der es von der Öffnung (27) beabstandet ist, bewegbar ist und den Durchgang für den Abfluss des infundierten Getränks aus der Aussparung (4) freihält;
wobei die Maschine (100) **dadurch gekennzeichnet ist, dass** die Dichtungsventilvorrichtung (25) weiterhin umfasst:
- mindestens ein Verriegelungselement (35), um das mindestens eine Dichtungselement (28) in der zweiten Position zu halten.

2. Maschine (100) zur Herstellung von infundierten Getränken nach Anspruch 1, **dadurch gekennzeichnet, dass** sie erste elastische Mittel (30) umfasst, die angepasst sind, um das mindestens eine Dichtungselement (28) in die erste Position zu drücken.

3. Maschine (100) zum Herstellen von infundierten Getränken nach Anspruch 1, **dadurch gekennzeichnet, dass** die Bewegung von der ersten Position zu der zweiten Position des wenigstens einen Dichtungselements (28) auf der Tatsache beruht, dass der vordefinierte Schwellenwert des Drucks im Inneren der Infusionskammer (14) erreicht ist.

4. Maschine (100) zur Herstellung von infundierten Getränken nach Anspruch 1, **dadurch gekennzeichnet, dass** das Verriegelungselement (35) umfasst:
- mindestens ein zweites Kolbenelement (36); und
- mindestens einen Hohlraum (37);
- das zweite Kolbenelement (36) ist zwischen einer ersten Position, in der das zweite Kolbenelement (36) in den Hohlraum (37) eingreift, wodurch das wenigstens eine Dichtungselement (28) in der zweiten Position gehalten wird; und eine zweite Position, in der das zweite Kolbenelement (36) von dem Hohlraum (37) beabstandet ist, bewegbar und ermöglicht, dass das wenigstens eine Dichtungselement (28) in seine erste Position zurückkehrt, in der es die Öffnung (27) schneidet.

5. Maschine (100) zur Herstellung von infundierten Getränken nach Anspruch 4, **dadurch gekennzeichnet, dass** das Verriegelungselement (35) ferner elastische Mittel umfasst, die angepasst sind, um auf das zweite Kolbenelement (36) einzuwirken.

6. Maschine (100) zur Herstellung von infundierten Getränken nach Anspruch 1, **dadurch gekennzeichnet, dass** sie ein Entriegelungselement (39) umfasst, um das wenigstens eine Dichtungselement (28) aus der zweiten Position freizugeben, wodurch es unter der Wirkung der elastischen Mittel (30) in die erste Position zurückkehren kann.

7. Maschine (100) zur Herstellung von infundierten Getränken nach Anspruch 1, **dadurch gekennzeichnet, dass** die ersten elastischen Mittel (30) eine Schraubenfeder (30a) umfassen, die das wenigstens eine Dichtungselement (28) zusammendrückt, um es zu der Öffnung (27) zu drücken.

8. Maschine (100) nach Anspruch 1, **dadurch gekennzeichnet, dass** es Einstellmittel umfasst, um den Druckschwellenwert des Getränks in der Infusionskammer (14) einzustellen, um die Mündung der Öffnung (27) so einzustellen, dass das infundierte Getränk passieren kann.

9. Maschine (100) nach Anspruch 6, **dadurch gekennzeichnet, dass** das Entriegelungselement (39) einen Hebel (40) umfasst, der auf das zweite Kolbenelement (36) wirken kann, um es aus dem Hohlraum (37) zu lösen.

10. Maschine (100) nach Anspruch 1, **dadurch gekennzeichnet, dass** das erste Infusionselement (3) in Bezug auf den unteren Abschnitt (13) entfernbar ist.

## Revendications

1. Machine (100) de préparation de boissons infusées, comprenant :
- au moins une portion inférieure (13) ; et
- au moins une portion supérieure (15) ;
- au moins un premier ensemble d'infusion (10) comprenant :
- un premier organe d'infusion (3), comprenant un évidement (4) adapté pour loger au moins partiellement une capsule ou dosette,
- un second organe d'infusion (5), adapté pour coopérer avec ledit premier organe d'infusion (3) de façon à fermer au moins partiellement ledit évidement (4) pour définir une chambre d'infusion (14) avec ledit premier organe d'infusion ;
dans laquelle :
- ledit premier organe d'infusion (3) comprend au moins un dispositif de vanne d'étanchéité (25) ; ledit dispositif de vanne d'étanchéité (25) étant adapté pour s'ouvrir pour permettre le passage de la boisson infusée lorsque la pression de ladite boisson dans la chambre d'infusion (14) dépasse une valeur seuil prédéfinie ;
- ledit dispositif de vanne d'étanchéité (25) comprenant :
- au moins un orifice (27) pour la sortie de la boisson infusée depuis ledit évidement ;
- au moins un organe d'étanchéité (28) mobile entre une première position dans laquelle ledit au moins un organe d'étanchéité (28) intercepte ledit orifice (27) empêchant ainsi la sortie de la boisson infusée, et une seconde position dans laquelle il est espacé dudit orifice (27) et laisse le passage dégagé pour la sortie de la boisson infusée depuis ledit évidement (4) ;
la machine (100) étant **caractérisée en ce que** ledit dispositif de vanne d'étanchéité (25) comprend en outre :
- au moins un organe de verrouillage (35) pour maintenir ledit au moins un organe d'étanchéité (28) dans ladite seconde position.

2. Machine (100) de préparation de boissons infusées selon la revendication 1, **caractérisée en ce qu'**elle comprend un premier moyen élastique (30) adapté pour pousser ledit au moins un organe d'étanchéité (28) vers ladite première position.

3. Machine (100) de préparation de boissons infusées selon la revendication 1, **caractérisée en ce que** le déplacement de ladite première position à ladite seconde position dudit au moins un organe d'étanchéité (28) est dû au fait que la valeur seuil prédéfinie de la pression à l'intérieur de ladite chambre d'infusion (14) a été atteinte.

4. Machine (100) de préparation de boissons infusées selon la revendication 1, **caractérisée en ce que** ledit organe de verrouillage (35) comprend :
- au moins un second organe de piston (36) ; et
- au moins une cavité (37) ;
- ledit second organe de piston (36) étant mobile entre une première position, dans laquelle ledit second organe de piston (36) est engagé dans ladite cavité (37) conservant ainsi ledit au moins un organe d'étanchéité (28) dans ladite seconde position ; et une seconde position dans laquelle ledit second organe de piston (36) est espacé de ladite cavité (37) et permet audit au moins un organe d'étanchéité (28) de retourner à sa première position dans laquelle il intercepte ledit orifice (27).

5. Machine (100) de préparation de boissons infusées selon la revendication 4, **caractérisée en ce que** ledit organe de verrouillage (35) comprend en outre un moyen élastique adapté pour agir sur ledit second organe de piston (36).

6. Machine (100) de préparation de boissons infusées selon la revendication 1, **caractérisée en ce qu'**elle comprend un organe de déverrouillage (39) pour libérer ledit au moins un organe d'étanchéité (28) de ladite seconde position, lui permettant ainsi de retourner à ladite première position sous l'action dudit moyen élastique (30).

7. Machine (100) de préparation de boissons infusées selon la revendication 1, **caractérisée en ce que** ledit premier moyen élastique (30) comprend un ressort hélicoïdal (30a) comprimant ledit au moins un organe d'étanchéité (28) pour le pousser vers ledit orifice (27).

8. Machine (100) selon la revendication 1, **caractérisée en ce qu'**elle comprend un moyen de réglage pour régler la valeur seuil de pression de ladite boisson dans la chambre d'infusion (14) afin de régler l'ouverture dudit orifice (27) de sorte que la boisson infusée puisse passer.

9. Machine (100) selon la revendication 6, **caractérisée en ce que** ledit organe de déverrouillage (39) comprend un levier (40) adapté pour agir sur ledit second organe de piston (36) pour le dégager de ladite cavité (37).

10. Machine (100) selon la revendication 1, **caractérisée en ce que** ledit premier organe d'infusion (3) est amovible par rapport à ladite portion inférieure (13).
